# EUROPÄISCHE PATENTSCHRIFT

(11) **EP 2 188 087 B1**
(45) Veröffentlichungstag und Bekanntmachung des Hinweises auf die Patenterteilung: **19.10.2011**
(21) Anmeldenummer: 08787489.7
(22) Anmeldetag: 26.08.2008
(51) Int. Cl.: B23Q 3/157, B24B 33/02, B24B 33/08, B24B 33/10

(54) **WERKZEUGMASCHINE MIT HONWERKZEUG**
MACHINE TOOL WITH HONING TOOL
MACHINE-OUTIL AVEC OUTIL DE RODAGE

(30) Priorität: 13.09.2007 DE 102007045045
(43) Veröffentlichungstag der Anmeldung: 26.05.2010
(73) Patentinhaber: MAG IAS GmbH, 73033 Göppingen (DE)
(72) Erfinder: MEIDAR, Moshe, Israel c/o MAG, New York, NY 10022 (US); HORN, Wolfgang, 73035 Göppingen (DE); SCHMID, Martin, 73230 Kirchheim (DE)
(74) Vertreter: Hoeger, Stellrecht & Partner Patentanwälte
(86) Internationale Anmeldenummer: PCT/EP2008/061141
(87) Internationale Veröffentlichungsnummer: WO 2009/037071

(56) Entgegenhaltungen:
- EP-A- 1 616 665
- WO-A-2005/016592
- DE-A1- 4 430 113
- DE-A1-102006 007 704
- DE-A1-102006 028 728
- US-A1- 2004 253 914

## Beschreibung

Die vorliegende Erfindung betrifft eine Werkzeugmaschine.

Aus der nicht vorveröffentlichten DE 10 2006 028 728 A1 ist ein Honwerkzeug zum Fertig-Honen von Bohrungen an einem Werkstück und ein Verfahren zum Fertig-Honen in einem Werkstück bekannt.

Aus der DE 44 30 113 A1 ist eine Werkzeugmaschine für die Bearbeitung von kurzen rotationssymmetrischen Werkstücken bekannt. An einem Werkzeugrevolver können Hon- und/oder Schwingschleifeinheiten angebracht sein. In jeweils derselben Werkstückaufspannung ist auch die Feinstbearbeitung einzelner Flächen möglich.

Aus der DE 10 2006 007 704 A1 ist ein Verfahren zur Ankopplung eines Honwerkzeugs an eine Honspindel bekannt, bei dem das Honwerkzeug in die Honspindel in eine Fügeposition eingesetzt wird, wobei eine Honwerkzeugmittelachse koaxial zur Honspindelmittelachse ausgerichtet ist. Das Honwerkzeug wird an der Honspindel arretiert durch eine Betätigung einer der Honspindel zugeordneten Stelleinrichtung.

Aus der EP 1 616 665 A1 ist eine Honmaschine mit einer Honstange zur Übertragung von Bearbeitungskräften auf ein Honwerkzeug bekannt.

Aus der US 2004/0253914 A1 ist ein Honwerkzeug bekannt, wobei ein Fluidaktuator den Mechanismus bereitstellt zur radialen Zustellung von abrasiven Elementen.

Werkzeugmaschinen werden verwendet, um Werkstücke zu bearbeiten, insbesondere durch spanenden Materialabtrag. Bei vielen Werkstücken, beispielsweise bei Motorgehäusen, sind Toleranzen im Bereich von wenigen Mikrometern einzuhalten. Gleichzeitig ist es aber erforderlich, dass ein Werkstück sich möglichst effektiv herstellen lässt.

Hiervon ausgehend liegt der vorliegenden Erfindung die Aufgabe zugrunde, eine Werkzeugmaschine der eingangs genannten Art so zu verbessern, dass sie eine hochgenaue und effektive Bearbeitung eines Werkstücks ermöglicht.

Diese Aufgabe wird erfindungsgemäß mit den Merkmalen gemäß Anspruch 1 gelöst.

Die erfindungsgemäße Werkzeugmaschine ermöglicht es, ein Werkstück mit derselben Werkzeugmaschine sowohl vorzubearbeiten, als auch honend zu bearbeiten. Das Werkstück kann sowohl während der Vorbearbeitung als auch während der honenden Bearbeitung an demselben Werkstückträger festgelegt sein. Auf diese Weise kann das Werkstück in nur einer Aufspannung zunächst mit Hilfe des Vorbearbeitungswerkzeugs vorbearbeitet werden, beispielsweise unter Abtrag einer vergleichsweise großen Materialmenge. In derselben Aufspannung kann das Werkstück hieran anschließend honend bearbeitet werden, so dass im Anschluss an die Vorbearbeitung des Werkstücks eine hochgenaue Bearbeitung der vorbearbeiteten Werkstückoberfläche erfolgen kann.

Für das Vorbearbeitungswerkzeug und für das Honwerkzeug können jeweils eigene (getrennte) Werkzeugträger vorgesehen sein. Alternativ hierzu kann ein gemeinsamer Werkzeugträger vorgesehen sein, an welchem zunächst das Vorbearbeitungswerkzeug fixiert ist und anschließend nach Austausch des Vorbearbeitungswerkzeugs das Honwerkzeug fixiert wird.

Der Werkzeugträger weist eine trägerseitige Kühlschmierstoff-Schnittstelle zur Versorgung des Honwerkzeugs mit einem insbesondere wassergemischten Kühlschmierstoff auf. Dies ermöglicht eine einfache Bereitstellung des insbesondere wassergemischten Kühlschmierstoffs an dem Honwerkzeug.

Das Honwerkzeug weist mindestens einen Elementhalter und mindestens ein relativ zu dem Elementhalter bewegliches Honelement aufweist. Ein solches Honelement ist insbesondere eine Honleiste.

Das Honelement ist mittels des Kühlschmierstoffs in Richtung auf eine zu bearbeitende Werkstückoberfläche zustellbar. Es ist möglich, dass der Kühlschmierstoff unmittelbar auf das Honelement wirkt.

Bevorzugt ist es, wenn der Werkzeugträger eine Spindel aufweist, mit welcher das Werkzeug rotierend antreibbar ist. Auf diese Weise können das Vorbearbeitungswerkzeug und/oder das Honwerkzeug rotierend angetrieben werden.

Nach einer vorteilhaften Ausführungsform der Erfindung ist mittels des Werkzeugträgers das Werkzeug entlang einer Werkzeugachse oszillierend antreibbar. Hierfür kann beispielsweise eine Pinole eingesetzt werden.

Nach einer weiteren Ausführungsform der Erfindung ist vorgesehen, dass der Werkstückträger in zu einer Werkzeugachse parallelen Richtungen oszillierend antreibbar ist. Dies ermöglicht eine oszillierende Bewegung des Werkstücks.

Durch eine Überlagerung einer Drehbewegung des Werkzeugs und einer oszillierenden Bewegung des Werkzeugs und/oder des Werkstücks kann eine für eine honende Bearbeitung charakteristische Oberflächenstruktur mit sich kreuzenden Bearbeitungsspuren erzeugt werden.

Die Werkzeugmaschine umfasst mindestens eine Werkzeuglagereinrichtung zur Aufnahme des Vorbearbeitungswerkzeugs und des Honwerkzeugs. Wenn beispielsweise das Vorbearbeitungswerkzeug mit dem Werkzeugträger verbunden ist, kann das Honwerkzeug in der Werkzeuglagereinrichtung bereitgehalten werden. Im Anschluss an die Vorbearbeitung eines Werkstücks kann das Vorbearbeitungswerkzeug der Werkzeuglagereinrichtung zugeführt und das Honwerkzeug mit dem Werkzeugträger verbunden werden.

Die Werkzeugmaschine umfasst eine Werkzeugwechseleinrichtung zum Wechseln eines mit dem Werkzeugträger verbundenen oder zu verbindenden Werkzeugs. Dies ermöglicht einen einfachen Austausch des Vorbearbeitungswerkzeugs und des Honwerkzeugs.

Nach einer besonders vorteilhaften Ausführungsform der Erfindung ist vorgesehen, dass der Werkzeugträger mindestens einen trägerseitigen Verbindungsabschnitt aufweist und dass das Vorbearbeitungswerkzeug und das Honwerkzeug jeweils einen werkzeugseitigen Verbindungsabschnitt aufweisen, welcher jeweils mit dem trägerseitigen Verbindungsabschnitt des Werkzeugträgers lösbar verbindbar ist. Dies ermöglicht einen schnellen und einfachen Austausch des Vorbearbeitungswerkzeugs und des Honwerkzeugs. Hierbei ist es auch vorteilhaft, dass das Vorbearbeitungswerkzeug und das Honwerkzeug in derselben Position relativ zu dem Werkzeugträger festgelegt werden können. Hierdurch lässt sich insbesondere ein Werkstück hochgenau bearbeiten, welches sowohl während der spanenden Vorbearbeitung als auch während der honenden Bearbeitung an dem Werkstückträger in derselben Aufspannung verbleibt.

Vorteilhaft ist es, wenn die Werkzeugmaschine eine standardisierte Verbindungseinrichtung zur Verbindung des Vorbearbeitungswerkzeugs mit dem Werkzeugträger und/oder zur Verbindung des Honwerkzeugs mit dem Werkzeugträger umfasst. Dies ermöglicht einen besonders flexiblen Einsatz der Werkzeugmaschine unter Verwendung einer Vielzahl von unterschiedlichen Werkzeugen.

Nach einer weiteren Ausführungsform der Erfindung umfasst die Werkzeugmaschine eine Adaptereinrichtung zur Verbindung des Honwerkzeugs mit dem Werkzeugträger. Eine solche Adaptereinrichtung weist vorzugsweise einen ersten Verbindungsabschnitt zur Verbindung der Adaptereinrichtung mit dem Werkzeugträger und einen zweiten Verbindungsabschnitt zur Verbindung der Adaptereinrichtung mit dem Honwerkzeug auf. Vorteilhaft ist es, wenn der erste Verbindungsabschnitt für eine standardisierte Verbindungseinrichtung ausgelegt ist und wenn der zweite Verbindungsabschnitt für eine für das Honwerkzeug spezifische Verbindungseinrichtung ausgelegt ist.

Besonders vorteilhaft ist es, wenn die standardisierte Verbindungseinrichtung eine Hohlschaftkegel-Verbindung ist. Eine solche Verbindungseinrichtung hat den Vorteil, dass ein Vorbearbeitungswerkzeug bzw. ein Honwerkzeug zuverlässig und unter Einhaltung geringster Toleranzen an dem Werkzeugträger festlegbar sind. Mit einer Hohlschaftkegel-Verbindung lässt sich auch eine Drehrichtungsumkehr realisieren, ohne dass sich das Werkzeug von dem Werkzeugträger löst. Die hochgenaue und unempfindliche Verbindungseinrichtung in Form einer Hohlschaftkegel-Verbindung ermöglicht insbesondere die Verwendung des Honwerkzeugs für ein Kurzhubhon-Verfahren.

Ferner ist es vorteilhaft, wenn das Honwerkzeug in seinem mit dem Werkzeugträger verbundenen Zustand relativ zu dem Werkzeugträger unbeweglich ist. Hierdurch wird die Bearbeitungsgenauigkeit der erfindungsgemäßen Werkzeugmaschine weiter erhöht.

Besonders vorteilhaft ist es ferner, wenn die Werkzeugmaschine mindestens eine Kühlschmierstoffeinrichtung zur Bereitstellung eines insbesondere wassergemischten Kühlschmierstoffs umfasst. Mit einem solchen Kühlschmierstoff lässt sich sowohl eine Kühlung und/oder eine Schmierung während der spanenden Vorbearbeitung des Werkstücks erreichen als auch eine Kühlung und/oder Schmierung während der honenden Bearbeitung des Werkstücks.

Insbesondere ist der Kühlschmierstoff eine Emulsion.

Das Honwerkzeug weist eine werkzeugseitige Kühlschmierstoff-Schnittstelle zum Einführen eines insbesondere wassergemischten Kühlschmierstoffs in das Honwerkzeug auf. Der auf diese Weise eingeführte insbesondere wassergemischte Kühlschmierstoff kann genutzt werden, um ein Fluid bereitzustellen, mit welchem ein Honelement des Honwerkzeugs in Richtung auf eine zu bearbeitende Werkstückoberfläche zustellbar ist, und um als Fertigungshilfsstoff bei der honenden Bearbeitung eines Werkstücks zu wirken.

Vorteilhaft ist es, wenn das Honwerkzeug mindestens ein Kraftübertragungselement aufweist, welches eine von dem Kühlschmierstoff auf das Kraftübertragungselement ausgeübte Kraft auf das mindestens eine Honelement überträgt. Dies ermöglicht eine besonders genaue Zustellung des Honelements in Richtung auf eine zu bearbeitende Werkstückoberfläche.

Günstig ist es ferner, wenn Werkzeugträger eine trägerseitige Druckluft-schnittstelle zur Versorgung des Honwerkzeugs mit Druckluft aufweist. Diese Druckluft kann genutzt werden, um während der honenden Bearbeitung eines Werkstücks einen Staudruck der Druckluft zu messen, so dass ein Rückschluss auf ein durch honende Bearbeitung des Werkstücks entstandenes Werkstückmaß ermöglicht ist.

Hierfür ist es insbesondere vorteilhaft, wenn das Honwerkzeug eine werkzeugseitige Druckluft-Schnittstelle zum Einführen der Druckluft in das Honwerkzeug aufweist und wenn das Honwerkzeug mindestens eine Druckluft-Austrittsöffnung zum Ausführen von Druckluft aus dem Honwerkzeug aufweist und wenn die werkzeugseitige Druckluft-Schnittstelle und die Druckluft-Austrittsöffnung fluidwirksam miteinander verbunden sind.

Vorzugsweise umfasst die Werkzeugmaschine mindestens eine Messeinrichtung zur Messung eines Staudrucks der Druckluft.

Günstig ist es ferner, wenn das Vorbearbeitungswerkzeug ein Vorbohrwerkzeug und/oder ein Fertigbohrwerkzeug ist. Dies ist insbesondere zur Vorbearbeitung von Motorenteilen, insbesondere eines Zylinderkopfs, vorteilhaft.

Besondere Vorteile ergeben sich, wenn die Werkzeugmaschine ein Bearbeitungszentrum ist. Ein Bearbeitungszentrum ist eine Werkzeugmaschine, die für einen automatisierten Betrieb ausgerüstet ist. Eine solche Werkzeugmaschine lässt sich sowohl zur spanenden Vorbearbeitung als auch zur honenden Bearbeitung eines Werkstücks einsetzen und ermöglicht darüber hinaus die Verwendung weiterer Bearbeitungsverfahren.

Mit einer erfindungsgemäßen Werkzeugmaschine ist eine hochgenaue und preisgünstige Bearbeitung eines Werkstücks ermöglicht.

Das Werkstück kann an einem Werkstückträger einer Werkzeugmaschine festgelegt werden und das Werkstück kann in seinem an dem Werkstückträger festgelegten Zustand mittels eines Vorbearbeitungswerkzeugs spanend vorbearbeitet werden und das vorbearbeitete Werkstück kann mittels eines Honwerkzeugs honend bearbeitet werden.

Zur honenden Bearbeitung eines Werkstücks kann als Fertigungshilfsstoff ein insbesondere wassergemischter Kühlschmierstoff verwendet werden. Insbesondere wird ausschließlich der insbesondere wassergemischte Kühlschmierstoff, vorzugsweise eine Emulsion, verwendet.

Die erfindungsgemäße Werkzeugmaschine umfasst ein Honwerkzeug, das eine werkzeugseitige Kühlschmierstoff-Schnittstelle zum Einführen eines Kühlschmierstoffs in das Honwerkzeug aufweist und durch mindestens einen Elementhalter und mindestens ein relativ zu dem Elementhalter bewegliches Honelement, wobei das Honelement mittels des Kühlschmierstoffs in Richtung auf eine zu bearbeitende Werkstückoberfläche zustellbar ist.

Dadurch lässt sich das Honwerkzeung an der Werkzeugmaschine an der entsprechenden Werkzeugspindel einsetzen, welches eine maschinenseitige Kühlschmierstoff-Schnittstelle aufweist. Über den Kühlschmierstoff ist ein Honbetrieb des Honwerkzeugs möglich. Es muss dadurch kein "externer" Antrieb wie beispielsweise ein Elektromotor für den Honbetrieb des Honwerkzeugs vorgesehen werden, sondern der Antrieb kann über die Kühlschmierstoff-Schnittstelle der Werkzeugmaschine erfolgen.

Insbesondere ist mindestens eine Kühlschmierstoff-Austrittsöffnung zum Ausführen des Kühlschmierstoffs aus dem Honwerkzeug vorgesehen, wobei die werkzeugseitige Kühlschmierstoff-Schnittstelle und die Kühlschmierstoff-Austrittsöffnung fluidwirksam miteinander verbunden sind. Dadurch ist neben der Antriebswirkung des Kühlschmierstoffs auch eine Kühlung und Schmierung bei der Werkstückbearbeitung möglich.

Das Honwerkzeug weist mindestens einen Elementhalter und mindestens ein relativ zu dem Elementhalter bewegliches Honelement auf, um eine Honbearbeitung durchführen zu können.

Das Honelement ist mittels des Kühlschmierstoffs in Richtung auf eine zu bearbeitende Werkstückoberfläche zustellbar, um eine Honbearbeitung durchführen zu können.

Es ist ferner günstig, wenn mindestens ein Kraftübertragungselement vorgesehen ist, welches eine von dem Kühlschmierstoff auf das Kraftübertragungselement ausgeübte Kraft auf das mindestens eine Honelement überträgt. Dadurch ist auf einfache Weise eine Honbearbeitung möglich, wenn beispielsweise ein erfindungsgemäßes Honwerkzeug an einer Werkzeugmaschine und insbesondere an einem Bearbeitungszentrum angeordnet ist.

Es kann auch vorgesehen sein, dass das Honwerkzeug eine werkzeugseitige Druckluft-Schnittstelle zum Einführen der Druckluft in das Honwerkzeug aufweist.

Es ist dann günstig, wenn mindestens eine Druckluft-Austrittsöffnung zum Ausführen von Druckluft aus dem Honwerkzeug vorgesehen ist, wobei die werkzeugseitige Druckluft-Schnittstelle und die Druckluft-Austrittsöffnung fluidwirksam miteinander verbunden sind.

Das Honwerkzeug weist die bereits im Zusammenhang mit der erfindungsgemäßen Werkzeugmaschine und dem erfindungsgemäßen Verfahren erläuterten Vorteile auf.

Weitere Merkmale und Vorteile der Erfindung sind Gegenstand der nachstehenden Beschreibung und der zeichnerischen Darstellung bevorzugter Ausführungsbeispiele.

In den Zeichnungen zeigen:
- Figur 1: eine Vorderansicht einer erfindungsgemäßen Werkzeug- maschine;
- Figur 2: eine teilweise geschnittene Seitenansicht einer Ausführungs- form eines Honwerkzeugs, welches mit einem Werkzeugträger der Werkzeugmaschine gemäß Figur 1 verbunden ist;
- Figur 3: eine teilweise geschnittene Seitenansicht des Honwerkzeugs gemäß Figur 2; und
- Figur 4: eine der Figur 2 entsprechende Ansicht einer weiteren Aus- führungsform eines Honwerkzeugs.

Gleiche oder funktional äquivalente Elemente sind in allen Figuren mit denselben Bezugszeichen bezeichnet.

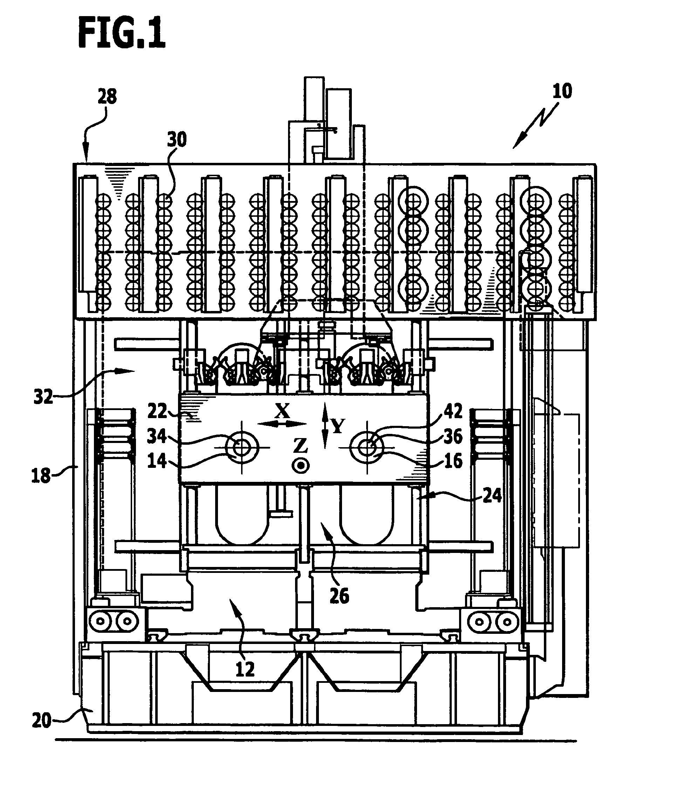

Ein Ausführungsbeispiel einer erfindungsgemäßen Werkzeugmaschine ist in Figur 1 gezeigt und dort als Ganzes mit 10 bezeichnet.

Die Werkzeugmaschine 10 weist einen schlittenförmigen Werkstückträger 12 auf. Dieser ist in einer z-Richtung der Werkzeugmaschine verschieblich und insbesondere oszillierend antreibbar.

Bei dem in Figur 1 gezeigten Ausführungsbeispiel ist die Werkzeugmaschine 10 ein Zweispindler, welcher als Werkzeugträger 14 und 16 jeweils Werkzeugspindeln umfasst.

Die Werkzeugträger 14 und 16 können in z-Richtung (welche in Figur 1 senkrecht zur Zeichenebene liegt) unverfahrbar sein oder als Pinolen ausgebildet sein, welche längs ihrer Längsachse (der z-Richtung) verschieblich sind.

Die Werkzeugmaschine 10 umfasst ein Maschinengestell 18 mit einem Maschinenbett 20. Das Maschinengestell 18 ist ortsfest aufgestellt. Die Werkzeugträger 14, 16 sind bezüglich des Maschinengestells 18 in x-Richtung und hierzu senkrechter y-Richtung beweglich geführt. Dazu ist bei dem in Figur 1 gezeigten Ausführungsbeispiel ein Werkzeugträgerschlitten 22 vorgesehen, welcher die beiden Werkzeugträger 14 und 16 hält.

Der Werkzeugträgerschlitten 22 wiederum ist an einer Führungseinrichtung 24 beispielsweise in vertikaler Richtung verfahrbar geführt. Es können noch weitere Werkzeugträgerschlitten 22 vorgesehen sein, um auch für eine Beweglichkeit der Werkzeugträger 14, 16 in einer Querrichtung zu sorgen. Die Führungseinrichtung 24 ist fest gegenüber dem Maschinengestell 18 angeordnet.

Die Werkzeugträger 14, 16 weisen einen Bewegungsraum 26 auf, welcher durch die Beweglichkeit des oder der Werkzeugträgerschlitten 22 und gegebenenfalls der Werkzeugträger 14, 16 in z-Richtung bestimmt ist.

Die Werkzeugmaschine 10 umfasst eine Werkzeuglagereinrichtung 28, in welcher eine Vielzahl von Werkzeugen gelagert ist; diese Werkzeuge sind in Figur 1 durch das Bezugszeichen 30 angedeutet. Mit Hilfe einer Werkzeugwechseleinrichtung 32 lassen sich Werkzeuge an den Werkzeugträgern 14, 16 wechseln, wobei Werkzeuge zur Ablage der Werkzeuglagereinrichtung 28 zuführbar sind und Werkzeuge zum Wechseln von der Werkzeuglagereinrichtung 28 her zuführbar sind. Hinsichtlich des detaillierten Aufbaus und der Funktionsweise der Werkzeuglagereinrichtung 28 und der Werkzeugwechseleinrichtung 32 wird auf die WO 2005/016592 derselben Anmelderin Bezug genommen.

Mindestens eines der Werkzeuge 30 ist ein Vorbearbeitungswerkzeug 34 zur spanenden Vorbearbeitung eines an dem Werkstückträger 12 festlegbaren Werkstücks. Ein solches Vorbearbeitungswerkzeug 34 ist beispielsweise ein Vorbohrwerkzeug und/oder ein Fertigbohrwerkzeug.

Mindestens eines der Werkzeuge 30 ist ein Honwerkzeug 36 zur honenden Bearbeitung eines zuvor mit Hilfe eines Vorbearbeitungswerkzeugs 34 spanend bearbeiteten Werkstücks.

Bei dem in der Zeichnung dargestellten Ausführungsbeispiel ist das Vorbearbeitungswerkzeug 34 lösbar mit dem Werkzeugträger 14 verbunden. Das Honwerkzeug 36 ist lösbar mit dem Werkzeugträger 16 verbunden. Die Werkzeugträger 14 und 16 können zueinander unterschiedlich sein, so dass ein Vorbearbeitungswerkzeug 34 nur mit dem Werkzeugträger 14 verbindbar ist und so dass ein Honwerkzeug 36 nur mit dem Werkzeugträger 16 verbindbar ist. Bevorzugt ist jedoch, dass ein Werkzeugträger 14, 16 sowohl mit einem Vorbearbeitungswerkzeug 34 als auch mit einem Honwerkzeug 36 verbindbar ist.

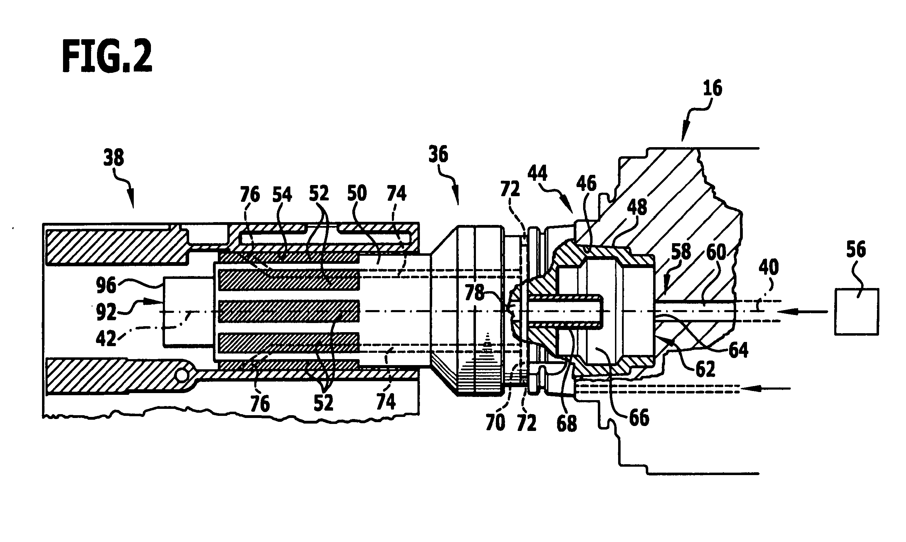

In Figur 2 ist das Honwerkzeug 36 in einer teilweise geschnittenen Seitenansicht dargestellt. Das Honwerkzeug 36 ist mit dem Werkzeugträger 16 verbunden und taucht in ein insgesamt mit 38 bezeichnetes, abschnittsweise dargestelltes Werkstück 38.

Das Werkstück 38 ist an dem Werkstückträger 12 (siehe Figur 1) fixiert und dort mit Hilfe einer an sich bekannten Aufspanneinrichtung fest aufgespannt.

Das Werkstück 38 ist insbesondere ein Motorenteil, beispielsweise ein Zylinderkopfgehäuse.

Der Werkzeugträger 16 weist eine Trägerachse 40 auf, welche in z-Richtung der Werkzeugmaschine 10 verläuft. Der Werkzeugträger 16 ist derart antreibbar, dass er im Betrieb um die Trägerachse 40 rotiert.

Das Honwerkzeug 36 weist eine zentrale Werkzeugachse 42 auf. Die Werkzeugachse 42 fluchtet mit der Trägerachse 40 des Werkzeugträgers 16.

Das Honwerkzeug 36 ist mit Hilfe einer Verbindungseinrichtung 44 fest mit dem Werkzeugträger 16 verbunden. Dies bedeutet, dass das Honwerkzeug 36 sowohl in zu der Werkzeugachse 42 paralleler Richtung als auch in hierzu radialer Richtung relativ zu dem Werkzeugträger 16 unbeweglich ist.

Die Verbindungseinrichtung 44 ist vorzugsweise eine standardisierte Verbindungseinrichtung, insbesondere eine Hohlschaftkegel-Verbindung.

Der Werkzeugträger 16 weist einen trägerseitigen Verbindungsabschnitt 46 auf, welcher mit einem werkzeugseitigen Verbindungsabschnitt 48 des Honwerkzeugs 36 lösbar verbindbar ist.

Bevorzugt ist, dass auch das in Figur 1 dargestellte Vorbearbeitungswerkzeug 34 einen werkzeugseitigen Verbindungsabschnitt 48 aufweist, der ebenfalls mit dem trägerseitigen Verbindungsabschnitt 46 des Werkzeugträgers 16 verbindbar ist. Vorzugsweise sind die werkzeugseitigen Verbindungsabschnitte 48 des Vorbearbeitungswerkzeugs 34 und des Honwerkzeugs 36 miteinander identisch.

Das Honwerkzeug 36 weist einen im Wesentlichen zylindrischen Elementhalter 50 auf. An dem Umfang des Elementhalters 50 verteilt angeordnet ist eine Mehrzahl von Honelementen 52 angeordnet.

Die Honelemente 52 sind in Form von Honleisten ausgebildet und relativ zu der Werkzeugachse 42 in radialer Richtung beweglich. Die Honelemente 52 erstrecken sich parallel zu der Werkzeugachse 42. Die Honelemente 52 sind in zu der Werkzeugachse 42 radialer Richtung auf eine hohlzylindrische Werkstückoberfläche 54 des Werkstücks 38 zustellbar.

Die Werkzeugmaschine 10 umfasst eine in Figur 2 symbolisch dargestellte Kühlschmierstoffeinrichtung 56. Mit Hilfe der Kühlschmierstoffeinrichtung 56 kann das Honwerkzeug 36 mit einem wassergemischten Kühlschmierstoff versorgt werden. Somit wird zur Versorgung des Honwerkzeugs 36 derselbe Kühlschmierstoff verwendet wie zur Versorgung des Vorbearbeitungswerkzeugs 34 bei der spanenden Vorbearbeitung des Werkstücks 38.

Der Werkzeugträger 16 weist eine trägerseitige Kühlschmierstoff-Schnittstelle 58 zur Versorgung des Honwerkzeugs 36 mit dem wassergemischten Kühlschmierstoff auf. Die Schnittstelle 58 umfasst eine Leitung 60. Die Leitung 60 verläuft durch den spindelförmigen Werkzeugträger 16 hindurch.

Die Leitung 60 mündet an einer werkzeugseitigen Kühlschmierstoff-Schnittstelle 62 des Honwerkzeugs 36. Die werkzeugseitige Schnittstelle 62 umfasst eine Öffnung 64 für den Eintritt von Kühlschmierstoff in das Honwerkzeug 36.

Ausgehend von der Öffnung 64 gelangt ein in das Honwerkzeug 36 eingeführter Kühlschmierstoff in einen Hohlraum 66 und von dort aus in eine Leitung 68. Die Leitung 68 mündet an einem Verteiler 70. Der Verteiler 70 ist mit Hilfe von Dichtungselementen 72 gegenüber einer Umgebung des Honwerkzeugs 36 abgedichtet.

Der Verteiler 70 steht mit einer Mehrzahl von Leitungen 74 in fluidwirksamer Verbindung, welche jeweils benachbart zu einem Honelement 52 an einer Oberfläche des Elementhalters 50 münden. Dort weisen die Leitungen 74 Kühlschmierstoff-Austrittsöffnungen 76 auf.

Der mit Hilfe der Kühlschmierstoffeinrichtung 56 bereitgestellte Kühlschmierstoff kann nicht nur zur Kühlung und zur Schmierung des Honwerkzeugs 36 verwendet werden, sondern auch dazu, eine Zustellung der Honelemente 52 in Richtung auf die zu bearbeitende Werkstückoberfläche 54 zu bewirken. Hierfür weist das Honwerkzeug 36 einen Druckraum 78 auf. Der Druckraum 78 steht in fluidwirksamer Verbindung mit der werkzeugseitigen Kühlschmierstoff-Schnittstelle 62. Insbesondere ist der Druckraum 78 von dem Verteiler 70 mit Kühlschmierstoff gespeist.

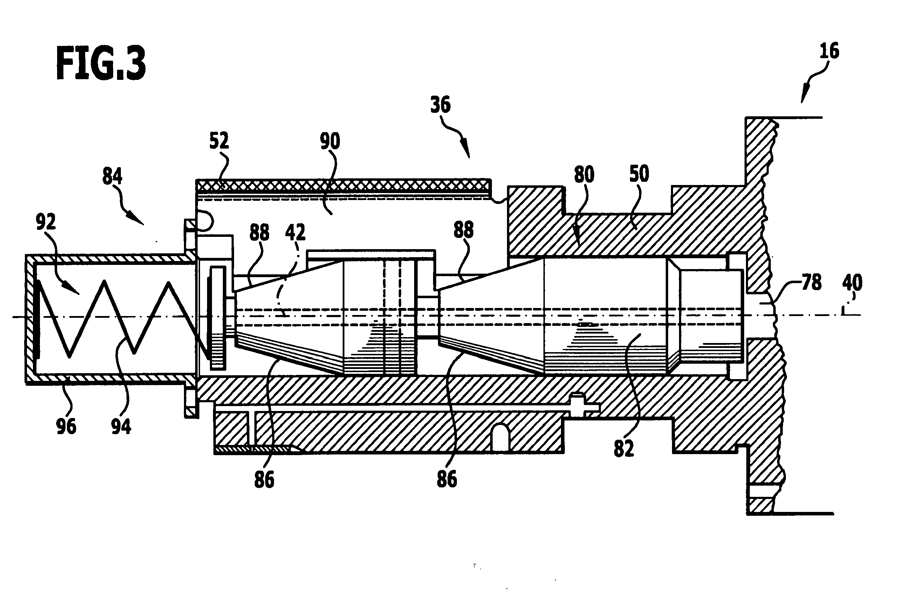

Der Druckraum 78 des Honwerkzeugs 36 ist auch in Figur 3 dargestellt. Der Druckraum 78 dient zur Beaufschlagung eines Kraftübertragungselements 80 in Form eines Kolbens 82. Wenn in dem Druckraum 78 Kühlschmierstoff unter Druck steht, kann der Kolben 82 in Richtung auf ein vorderes Ende 84 des Honwerkzeugs 86 bewegt werden.

Der Kolben 82 weist zwei konische Flächen 86 auf, welche mit geneigten Anlageflächen 88 eines Honelementabschnitts 90 eines Honelements 52 in Kontakt stehen. Bei einer Bewegung des Kolbens 82 in Richtung auf das vordere Ende 84 des Honwerkzeugs 36 gleiten die konischen Flächen 86 und die Anlageflächen 88 aufeinander ab, so dass das Honelement 52 nach radial außen in Richtung auf eine zu bearbeitende Werkstückoberfläche 54 (vgl. Figur 2) zugestellt wird.

Zur Rückstellung des Kolbens 82 in Richtung auf den Werkzeugträger 16 weist das Honwerkzeug 36 eine Rückstelleinrichtung 92 auf. Die Rückstelleinrichtung 92 umfasst insbesondere ein als Druckfeder ausgebildetes Rückstellelement 94, welches sich an einem Gehäuse 96 abstützt. Das Gehäuse 96 ist fest mit dem Elementhalter 50 verbunden.

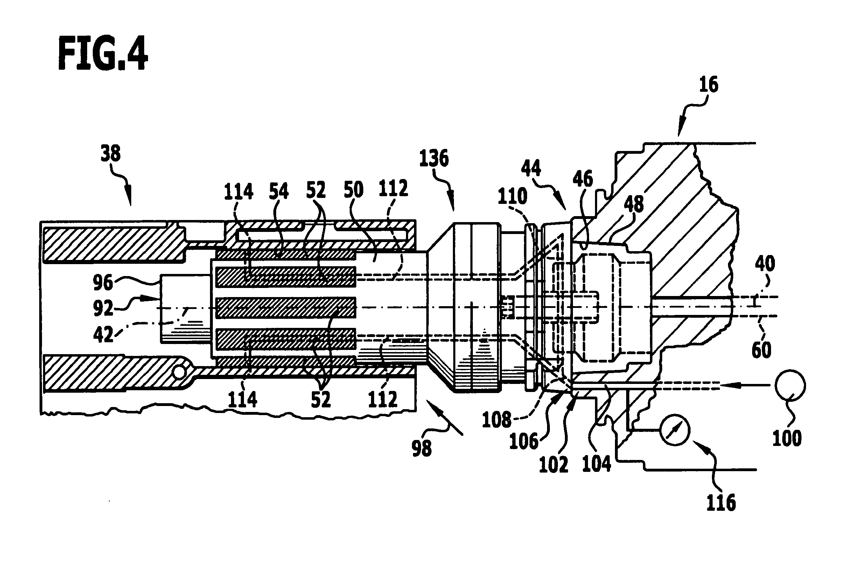

In Figur 4 ist ein weiteres Ausführungsbeispiel eines Honwerkzeugs 136 dargestellt, welches lösbar mit dem Werkzeugträger 16 verbunden ist.

Das Honwerkzeug 136 weist einen zu dem Honwerkzeug 36 ähnlichen Aufbau auf. Bezüglich der Gemeinsamkeiten mit dem Honwerkzeug 36 wird auf die vorstehende Beschreibung verwiesen.

Im Folgenden wird daher lediglich auf die Besonderheiten des Honwerkzeugs 136 eingegangen.

Das Honwerkzeug 136 wird gekühlt und geschmiert, indem ein wassergemischter Kühlschmierstoff von außen dem Werkzeug 136 und dem Werkstück 38 zugeleitet wird. Dies ist in Figur 4 mit einem Pfeil 98 angedeutet.

Die Werkzeugmaschine 10 umfasst eine in Figur 4 symbolisch dargestellte Druckluftquelle 100. Der Werkzeugträger 16 weist eine trägerseitige Druckluftschnittstelle 102 auf, welche eine Leitung 104 umfasst. Die Leitung 104 verläuft durch den spindelförmigen Werkzeugträger 16 hindurch und mündet an dem Honwerkzeug 136. Das Honwerkzeug 136 weist eine werkzeugseitige Druckluft-Schnittstelle 106 auf. Diese umfasst eine Leitung 108, welche an einen Verteiler 110 für eine Mehrzahl von Leitungen 112 mündet. Die Leitungen 112 münden an der Außenseite des Elementhalters 50 an Druckluft-Austrittsöffnungen 114.

Bei Versorgung des Honwerkzeugs 136 mit Druckluft stellt sich in den Leitungen 112, 110, 108 und 104 ein Staudruck ein. Das Honwerkzeug 136 umfasst eine Messeinrichtung 116 zur Messung dieses Staudrucks. Die Messeinrichtung 116 kann einen Druckschalter umfassen, welcher bei Erreichen eines bestimmten Staudrucks ein Signal erzeugt, so dass die honende Bearbeitung des Werkstücks 38 beendet wird.

## Patentansprüche

1. Werkzeugmaschine, umfassend
- mindestens einen Werkstückträger (12),
- mindestens einen Werkzeugträger (14, 16), mit welchem ein Werkzeug (34, 36, 136) lösbar verbindbar ist,
- mindestens ein Vorbearbeitungswerkzeug (34), wobei die Werkzeugmaschine (10) derart ausgebildet ist, dass das mindestens eine Vorbearbeitungswerkzeug (34) zur spanenden Vorbearbeitung eines Werkstücks (38), welches an dem Werkstückträger (12) festgelegt ist, mit mindestens einem Werkzeugträger (14, 16) lösbar verbindbar ist,
- mindestens ein Honwerkzeug (36, 136) zur honenden Bearbeitung eines vorbearbeiteten und an dem Werkstückträger (12) festgelegten Werkstücks (38), welches mit mindestens einem Werkzeugträger (14, 16) lösbar verbindbar ist, wobei das Honwerkzeug (36, 136) mindestens einen Elementhalter (50) und mindestens ein relativ zu dem Elementhalter (50) bewegliches Honelement (52) aufweist,
wobei der Werkzeugträger (14, 16) eine trägerseitige Kühlschmierstoff-Schnittstelle (58 ) zur Versorgung des Honwerkzeugs (36, 136) mit einem Kühlschmierstoff aufweist, das Honwerkzeug (36, 136) eine werkzeugseitige Kühlschmierstoff-Schnittstelle (62) zum Einführen eines Kühlschmierstoffs in das Honwerkzeug (36, 136) aufweist und das mindestens eine Honelement (52) mittels des Kühlschmierstoffs in Richtung auf eine zu bearbeitende Werkstückoberfläche (54) zustellbar ist,
- mindestens eine Werkzeuglagereinrichtung (28) zur Aufnahme des Vorbearbeitungswerkzeugs (34) und des Honwerkzeugs (36, 136), und
- mindestens eine Werkzeugwechseleinrichtung (32) zum Wechseln eines mit dem Werkzeugträger (14, 16) verbundenen oder zu verbindenden Werkzeugs (34, 36, 136).

2. Werkzeugmaschine nach Anspruch 1, **dadurch gekennzeichnet, dass** mittels des Werkzeugträgers (14, 16) das Werkzeug (34, 36, 136) entlang einer Werkzeugachse (42) oszillierend antreibbar ist.

3. Werkzeugmaschine nach einem der vorhergehenden Ansprüche, **dadurch gekennzeichnet, dass** der Werkstückträger (12) in zu einer Werkzeugachse (42) parallelen Richtungen oszillierend antreibbar ist.

4. Werkzeugmaschine nach einem der vorhergehenden Ansprüche, **dadurch gekennzeichnet, dass** der Werkzeugträger (14, 16) mindestens einen trägerseitigen Verbindungsabschnitt (46) aufweist und dass das Vorbearbeitungswerkzeug (34) und das Honwerkzeug (36, 136) jeweils einen werkzeugseitigen Verbindungsabschnitt (48) aufweisen, welcher jeweils mit dem trägerseitigen Verbindungsabschnitt (46) des Werkzeugträgers (14, 16) lösbar verbindbar ist.

5. Werkzeugmaschine nach einem der vorhergehenden Ansprüche, **gekennzeichnet durch** eine standardisierte Verbindungseinrichtung (44) zur Verbindung des Vorbearbeitungswerkzeugs (34) mit dem Werkzeugträger (14, 16).

6. Werkzeugmaschine nach einem der vorhergehenden Ansprüche, **gekennzeichnet durch** eine standardisierte Verbindungseinrichtung (44) zur Verbindung des Honwerkzeugs (36, 136) mit dem Werkzeugträger (14, 16), und insbesondere, dass die standardisierte Verbindungseinrichtung (44) eine Hohlschaftkegel-Verbindung ist.

7. Werkzeugmaschine nach einem der vorhergehenden Ansprüche, **gekennzeichnet durch** eine Adaptereinrichtung zur Verbindung des Honwerkzeugs (36, 136) mit dem Werkzeugträger (14, 16).

8. Werkzeugmaschine nach einem der vorhergehenden Ansprüche, **dadurch gekennzeichnet, dass** das Honwerkzeug (36, 136) mindestens eine Kühlschmierstoff-Austrittsöffnung (76) zum Ausführen des Kühlschmierstoffs aus dem Honwerkzeug (36, 136) aufweist.

9. Werkzeugmaschine nach einem der vorangehenden Ansprüche, **dadurch gekennzeichnet, dass** die werkzeugseitige Kühlschmierstoff-Schnittstelle (62) und eine Kühlschmierstoff-Austrittsöffnung (76) fluidwirksam miteinander verbunden sind.

10. Werkzeugmaschine nach einem der vorhergehenden Ansprüche, **dadurch gekennzeichnet, dass** das Honwerkzeug (36, 136) mindestens ein Kraftübertragungselement (80) aufweist, welches eine von dem Kühlschmierstoff auf das Kraftübertragungselement (80) ausgeübte Kraft auf das mindestens eine Honelement (52) überträgt.

11. Werkzeugmaschine nach einem der vorhergehenden Ansprüche, **dadurch gekennzeichnet, dass** der Werkzeugträger (14, 16) eine trägerseitige Druckluft-Schnittstelle (102) zur Versorgung des Honwerkzeugs (36, 136) mit Druckluft aufweist.

## Claims

1. Machine tool, comprising
- at least one workpiece carrier (12),
- at least one tool carrier (14, 16) to which a tool (34, 36, 136) is detachably connectable,
- at least one rough machining tool (34), the machine tool (10) being so configured that the at least one rough machining tool (34) for rough machining by chip removal from a workpiece (38), which is fixed to the workpiece carrier (12), is detachably connectable to at least one tool carrier (14, 16),
- at least one honing tool (36, 136), which is detachably connectable to at least one tool carrier (14, 16), for honing a rough machined workpiece (38) fixed to the workpiece carrier (12), the honing tool (36, 136) comprising at least one element holder (50) and at least one honing element (52) movable relative to the element holder (50),
the tool carrier (14, 16) having on the carrier a cooling lubricant interface (58) for supplying the honing tool (36, 136) with a cooling lubricant, the honing tool (36, 136) having on the tool a cooling lubricant interface (62) for introducing a cooling lubricant into the honing tool (36, 136), and the at least one honing element (52) being advanceable by means of the cooling lubricant in the direction towards a workpiece surface (54) which is to be machined,
- at least one tool storing device (28) for accommodating the rough machining tool (34) and the honing tool (36, 136), and
- at least one tool changing device (32) for changing a tool (34, 36, 136) connected or to be connected to the tool carrier (14, 16).

2. Machine tool in accordance with claim 1, **characterized in that** the tool (34, 36, 136) is oscillatingly drivable along a tool axis (42) by means of the tool carrier (14, 16).

3. Machine tool in accordance with any one of the preceding claims, **characterized in that** the workpiece carrier (12) is oscillatingly drivable in directions parallel to a tool axis (42).

4. Machine tool in accordance with any one of the preceding claims, **characterized in that** the tool carrier (14, 16) has on the carrier at least one connecting section (46), and **in that** the rough machining tool (34) and the honing tool (36, 136) each have on the tool a connecting section (48), which is each detachably connectable to the connecting section (46) of the tool carrier (14, 16) on the carrier.

5. Machine tool in accordance with any one of the preceding claims, **characterized by** a standardized connecting device (44) for connecting the rough machining tool (34) to the tool carrier (14, 16).

6. Machine tool in accordance with any one of the preceding claims, **characterized by** a standardized connecting device (44) for connecting the honing tool (36, 136) to the tool carrier (14, 16), and, in particular, in that the standardized connecting device (44) is a hollow shaft cone connection.

7. Machine tool in accordance with any one of the preceding claims, **characterized by** an adapter device for connecting the honing tool, (36, 136) to the tool carrier (14, 16).

8. Machine tool in accordance with any one of the preceding claims, **characterized in that** the honing tool (36, 136) comprises at least one cooling lubricant outlet opening (76) for discharge of the cooling lubricant from the honing tool (36, 136).

9. Machine tool in accordance with any one of the preceding claims, **characterized in that** the cooling lubricant interface (62) on the tool and a cooling lubricant outlet opening (76) are fluid-operatively connected to each other.

10. Machine tool in accordance with any one of the preceding claims, **characterized in that** the honing tool (36, 136) comprises at least one force-transmitting element (80) which transmits onto the at least one honing element (52) a force applied by the cooling lubricant to the force-transmitting element (80).

11. Machine tool in accordance with any one of the preceding claims, **characterized in that** the tool carrier (14, 16) has on the carrier a compressed air interface (102) for supplying the honing tool (36, 136) with compressed air.

## Revendications

1. Machine-outil, comportant
- au moins un porte-pièce (12),
- au moins un porte-outil (14, 16) auquel un outil (34, 36, 136) peut être assemblé de manière amovible,
- au moins un outil de préusinage (34), la machine-outil (10) étant réalisée de telle sorte que ledit au moins un outil de préusinage (34) pour le préusinage par enlèvement de copeaux d'une pièce (38), fixée sur le porte-pièce (12), peut être assemblé de manière amovible avec au moins un porte-outil (14, 16), - au moins un rodoir (36, 136) pour l'usinage par rodage d'une pièce (38) préusinée et fixée au porte-pièce (12), lequel est assemblé de manière amovible avec au moins un porte-outil (14, 16), ledit rodoir (36, 136) comportant au moins un support d'éléments (50) et au moins un élément de rodage (52) mobile par rapport au support d'éléments (50),
sachant que le porte-outil (14, 16) comporte une interface pour lubrifiant caloporteur (58) du côté support, destinée à alimenter le rodoir (36, 136) avec un lubrifiant caloporteur, le rodoir (36, 136) comporte une interface pour lubrifiant caloporteur (62) du côté outil, destinée à l'introduction d'un lubrifiant caloporteur dans le rodoir (36, 136), et ledit au moins un élément de rodage (52) peut être avancé au moyen du lubrifiant caloporteur vers une surface (54) de la pièce à usiner,
- au moins un système de palier (28) destiné à recevoir l'outil de préusinage (34) et le rodoir (36, 136), et
- au moins un dispositif de remplacement d'outil (32) pour le remplacement de l'outil (34, 36, 136) assemblé au porte-outil (14, 16) ou à assembler à celui-ci.

2. Machine-outil selon la revendication 1, **caractérisée en ce qu'**au moyen du porte-outil (14, 16), l'outil (34, 36, 136) peut être actionné avec un mouvement d'oscillation le long d'un axe (42) de l'outil.

3. Machine-outil selon l'une quelconque des revendications précédentes, **caractérisée en ce que** le porte-pièce (12) peut être actionné avec un mouvement d'oscillation dans des directions parallèles à un axe (42) de l'outil.

4. Machine-outil selon l'une quelconque des revendications précédentes, **caractérisée en ce que** le porte-outil (14, 16) comporte au moins une partie d'assemblage (46) du côté support, et **en ce que** l'outil de préusinage (34) et le rodoir (36, 136) comportent chacun une partie d'assemblage (48) du côté outil, laquelle peut être assemblée de manière amovible respectivement avec la partie d'assemblage (46) du côté support du porte-outil (14, 16).

5. Machine-outil selon l'une quelconque des revendications précédentes, **caractérisée par** un raccord (44) standardisé pour assembler l'outil de préusinage (34) avec le porte-outil (14, 16).

6. Machine-outil selon l'une quelconque des revendications précédentes, **caractérisée par** un raccord (44) standardisé pour assembler le rodoir (36, 136) avec le porte-outil (14, 16), et, en particulier, en ce que le raccord (44) standardisé est un raccord conique à tige creuse.

7. Machine-outil selon l'une quelconque des revendications précédentes, **caractérisée par** un adaptateur destiné à assembler le rodoir (36, 136) avec le porte-outil (14, 16).

8. Machine-outil selon l'une quelconque des revendications précédentes, **caractérisée en ce que** le rodoir (36, 136) comporte au moins un orifice d'évacuation (76) pour l'évacuation du lubrifiant caloporteur hors du rodoir (36, 136).

9. Machine-outil selon l'une quelconque des revendications précédentes, **caractérisée en ce que** l'interface pour lubrifiant caloporteur (62) du côté outil et un orifice d'évacuation (76) du lubrifiant caloporteur communiquent efficacement l'un avec l'autre pour la circulation du fluide.

10. Machine-outil selon l'une quelconque des revendications précédentes, **caractérisée en ce que** le rodoir (36, 136) comporte au moins un élément de transmission des forces (80), par lequel la force exercée par le lubrifiant caloporteur sur l'élément de transmission des forces (80) est transmise sur au moins un élément de rodage (52).

11. Machine-outil selon l'une quelconque des revendications précédentes, **caractérisée en ce que** le porte-outil (14, 16) comporte une interface à air comprimé (102) du côté support, laquelle est destinée à fournir de l'air comprimé au rodoir (36, 136).
